# EUROPEAN PATENT APPLICATION

(11) **EP 0 740 482 A1**
(43) Date of publication of application: **30.10.1996**
(21) Application number: 95302887.5
(22) Date of filing: 28.04.1995
(51) Int. Cl.: H04Q 7/32, H04M 1/72, H04M 3/54, H04M 3/42

(54) **Telephone management system for answering a transfering calls in a system including a mobile cellular phone**

(71) Applicant: Hewlett-Packard Company, Palo Alto, California 94304 (US)
(72) Inventor: Proudler, Graeme John, Stoke Gifford, Bristol BS12 6XQ (GB)
(74) Representative: Newell, William Joseph

(57) **Abstract**

A telephone management system 10 provides appropriate routing of an incoming call to a user with both a cellular phone 14 and a cordless phone 36. The telephone management system 10 is connected to a switching fabric 28 and selectively routes incoming calls to a cellular phone 14, a cordless phone 36, or a further telephone 65 or answering machine 64, dependent on the operational statuses of the cellular phone 14 and the cordless phone 36 as deduced by the presence or absence of the cellular phone 14 and the cordless phone 36 at their respective base stations 12 and 34. Presence of the phones 14 and 16 may be determined by checking for current flow through the respective chargers 16 and 38. The management system 10 may also be connected to a single line 30 to provide appropriate routing of incoming calls.

## Description

### FIELD OF THE INVENTION

This invention relates to a telephone management system, and more particularly to telephone management systems for appropriately routing incoming calls to a user having use of a wirefree phone and a further phone or message management system.

### BACKGROUND TO THE INVENTION

Cordless phones allow a user limited mobile use within the operational range from the base unit, typically a few hundred meters. This provides a useful freedom to wander within a building, within an office or factory site, but not off site. Cellular phones allow much wider geographic coverage limited only by the extent of the cellular network, but call costs are significantly higher.

There has been a proposal for an eventual Universal Mobile Telephone System (UMTS), one of the main features of which is that each subscriber has a unique personal phone number. No matter where a subscriber may be, calling that subscriber's number will reach him or her. UMTS may eventually allow a single handset to be used both inside and outside buildings but this will take some years to develop and, when available, it will require purchase of UMTS hardware and software and may be economically unattractive to some users, particularly those who have already installed cordless phones in their premises for on-site communications, and purchased cellular phones for off-site communications.

Furthermore, some callers are reluctant to call a telephone number recognisable as a cellular phone number on account of the significantly higher call costs currently met and so a system where re-routing is effectively transparent to the caller may overcome this reluctance.

### SUMMARY OF THE INVENTION

Accordingly, we have designed a telephone management system for a user having use of a wirefree telephone and a further phone or message management system, for appropriately routing incoming calls to the wirefree telephone or to said further phone or message management system. In a preferred arrangement, the telephone management system provides a level of service similar to that expected from UMTS.

Our preferred system allows a user having a cellular phone and a cordless phone to be contacted on a single number, usually POTS (Plain Old Telephone System) with the system automatically routing the incoming call to the appropriate phone, according to the deduced location of the user. In addition the user rather than the caller bears any re-routing costs over and above the call to the POTS number.

In one aspect, this invention provides a telephone management system for use with a wirefree phone and a further phone or message management means, said system defining a base station for said wirefree phone, and including means for determining the presence or absence of said wirefree phone at said base station, thereby to deduce the operational status thereof, and means for selectively routing an incoming call to said wirefree phone, or to said further phone or message management means, dependent on the absence or presence of said wirefree phone.

By this arrangement, the caller only needs to dial a single number and the management system will route the call to the wirefree phone if it is away from the base station, otherwise to the further phone or management system.

The wirefree phone may be a cordless phone but the system is particularly advantageous where it comprises a cellular phone.

Where, as is usual, the wirefree phone incorporates a rechargeable battery, said wirefree phone base station conveniently includes electrical charging means for charging the battery of said wirefree phone. This may be a special unit but it is preferred to use the unit supplied with the wirefree phone.

The means for determining the presence or absence of said wirefree phone may take many forms but conveniently comprises current detector means responsive in use to current consumption by said wirefree phone electrical charging means.

Said further phone or message management means preferably includes a further wirefree phone, and said system further defines a base station for said further wirefree phone and includes means for determining the presence or absence of said further wirefree phone at said base station thereby to deduce the operational status thereof, and said means for selectively routing is responsive also to the presence or absence of said further wirefree phone at its base station.

To provide increased flexibility and economy, said further wirefree phone may comprise a cordless phone, so that the user may be contacted both when roaming on site and off site.

As before, said further wirefree phone base station preferably includes electrical charging means for charging the battery of said further wirefree phone, and said means for determining the presence or absence of said further wirefree phone conveniently comprises current detector means responsive in use to current consumption by said further wirefree phone electrical charging means.

To allow for those instances where the user is not contactable on either the cellular phone or the cordless phone, said system preferably further includes telephone answering means operable to transmit an outgoing message and/or record an incoming message, and said means for selectively routing is preferably operable to route an incoming call to said telephone answering machine, if neither wirefree phone is operational or if the selected phone is busy or does not answer. Likewise, the system may include a further phone, and said means for selectively routing may route an incoming call to said further phone if neither of said wirefree phones is operational, or if the selected phone is busy or does not answer.

The detailed operation of the telephone management system depends on the phones and message management means available to the user, and on whether it has access to just a single line or to a plurality of lines and a switching fabric. Thus, where the management system includes a cellular phone and a cordless phone, and has access to a plurality of lines and a switching fabric, said selective routing is advantageously as follows:-
(i) if the cellular phone is away from its base station, incoming calls are routed to the cellular phone,
(ii) if only the cordless phone is away from its base station, incoming calls are routed to the cordless phone,
(iii) if neither the cellular phone nor the cordless phone is away from its respective base station, incoming calls are selectively diverted to an alternative destination or to a telephone answering means.

Where the management system includes the same phones as before but access to a single line, said selective routing is advantageously as follows:-
(i) if the cellular phone is away from its base station, incoming calls are routed to a telephone answering means, which optionally instructs the caller to dial the cellular phone number direct,
(ii) if only the cordless phone is away from its base station, incoming calls are routed to the cordless phone,
(iii) if neither the cellular phone nor the cordless phone is away from its respective base station, incoming calls are routed to a normal phone or a telephone answering means.

The telephone management system may be configured in many different ways, but it may be desirable to use the proprietary charging and base units supplied with the wirefree phones and to connect these to a telephone management apparatus which detects the presences of the wirefree phones at their proprietary units, and effects control.

Thus in another aspect this invention provides a telephone management apparatus for use with a wirefree phone connectable to an associated base station, and a further phone or message management means, and for selectively routing incoming calls to said wirefree phone or said further phone or message management means, said apparatus comprising:-
interface means for being connected in use to a telephone line or switching fabric to transmit or receive calls via said telephone line or switching fabric;
presence detector means for detecting the presence of said wirefree phone at said base station; and
call routing means responsive to said presence detector means to route an incoming call received via said interface means to said wirefree phone or to said further phone or message management means, dependent on the output of said presence detector means.

Said further phone or message management means preferably includes a further wirefree phone connectable to a further wirefree phone base station, and said apparatus may include further presence detector means for detecting the presence of said further wirefree phone, said call routing means may be responsive also to said further presence detector means selectively to route an incoming call to said wirefree phone or said further wirefree phone.

Whilst the invention has been described above, it extends to any inventive combination of the features set out above or in the following description.

### BRIEF DESCRIPTION OF THE DRAWINGS

The invention may be performed in various ways and, by way of example only, an embodiment and two operating modes thereof will now be described in detail, reference being made to the accompanying drawings, in which:-
- Figure 1: is a schematic diagram of an embodiment of a telephone management system in accordance with this invention;
- Figure 2: is a flow chart showing operation of the embodiment of Figure 1 for a user with a cellular phone and a cordless phone and access to a switching fabric, and
- Figure 3: is a flow chart showing the operation of the embodiment of Figure 1 for a user with a cellular phone and a cordless phone and access to a single line only.

### DESCRIPTION OF THE PREFERRED EMBODIMENT

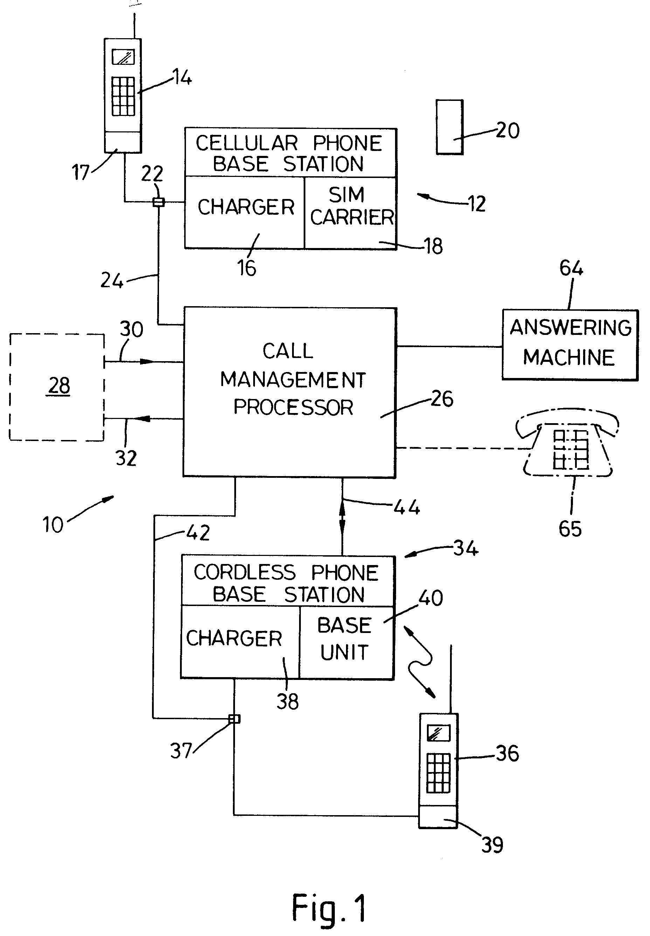

The telephone management system 10 illustrated in Figure 1 may be operated in two different ways according to whether the system has access to a switching fabric 28, or just to a single line 30. Where the system 10 has access to a switching fabric 28, the system is capable of receiving an incoming call via the POTS and selectively routing the call to the user via his cordless phone 36 or his cellular phone 14 dependent on which he has with him at the time, and re-routing costs are borne by the user.

In Figure 1, the illustrated embodiment of the telephone management system 10 comprises a generally conventional cellular phone base station 12 for a cellular phone 14, the base station 12 including a charger 16 having a charging connector 17 for the cellular phone 14 and, optionally, a carrier 18 for a SIM (Subscriber Identification Module) card 20. The cellular phone base station 12 is preferably the proprietary unit supplied with the cellular phone 14.

The telephone management system 10 is provided with means for detecting or deducing whether the cellular phone 14 is present or absent at the base station 12. Absence clearly indicates that the user has the cellular phone 14 with him away from the base station 12 and so calls should be routed to the cellular phone 14. In this embodiment, where the charger 16 will always supply at least a trickle-charge whenever the cellular phone 14 is properly located at the base unit, with the cellular phone battery connected electrically to the charger 16, presence or absence is detected by means of a current detector 22 which monitors the DC flow from the charger to the charging connector 17. Alternatively, current flow along the mains supply to the charger 16 could be monitored. The current detector 22 sends a presence/absence status signal along line 24 to a call management processor 26.

The current detector 22 could be a small resistor to detect flow of DC. If mains current is monitored, the sensor could be a coil or the like surrounding the mains lead to the charger, or associated with a mains socket which forms part of the management system 10 and into which a plug connected to the charger 16 is plugged.

However there are many other ways in which presence/absence may be detected. For example the base station 12 may include a socket or cradle in which the cellular phone 14 is placed when the user is at his base station, and the presence/absence may be detected by a microswitch associated with the socket or cradle. If the phone is fitted with a SIM card 20, then mere presence of the cellular phone 14 at the base station 12 is not a reliable indication that the user is nearby, as he may have taken the SIM card 20 to fit into another cellular phone and may be far away from the base station. Thus, for this situation, presence/absence of the user may instead be determined by detecting whether the SIM card 20 is in the carrier 18.

The call management processor 26 receives incoming calls from the switching fabric 28 along line 30 and is connected to the switching fabric 28 by an outgoing line 32. The switching fabric 28 may be a PABX (Private Automatic Branch Exchange) or any other switching fabric that has multiple POTS lines, or equivalent functionality that gives access to lines within the POTS network.

The call management processor 26 is also connected to a cordless phone base station 34 for a cordless phone 36, the base station 34 comprising a charger 38 and a base unit 40 providing a radio link to the cordless phone 36. As with the cellular phone 14, the cordless phone base station 34 is preferably the unit supplied with the cordless phone. The system also includes detecting means for determining whether the cordless phone 36 is present or absent, and this again here comprises a current flow detector 37 which may be a resistor to detect DC flow from the charger 38 to the charging connector 39. Alternatively, if mains sensing is used, there may be a detection coil around the mains cable to the charger 38 or a detector associated with a socket from which power is supplied to the charger 38. The current detector 37 sends a presence/absence status signal along line 42 to the call management processor 26.

The processor 26 may also route incoming calls along line 44 to the cordless phone base unit 40, dependent on the detected status of the cellular and cordless phone base stations 12 and 34.

Outgoing calls from the cordless phone 36 pass via the base unit 40, along line 44 to the processor 26 which connects the calls to the switching fabric 28.

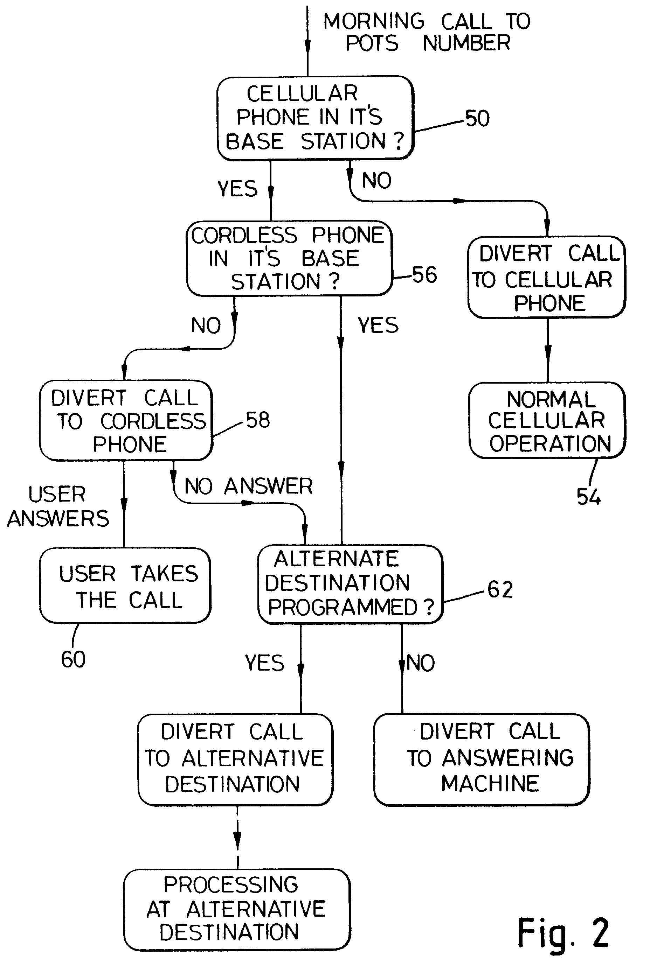

The operation of the system 10 when connected to a switching fabric 28 will now be described with reference to Figure 2. A user has a POTS phone number and a cellular phone number, but only his POTS number is publicised. An incoming call passes from the POTS through the switching fabric 28 to the call management processor 26. The processor 26 checks at 50 the status signal on line 24 to see whether the cellular phone 14 is absent from the cellular phone base station 12. If so, the processor 26 diverts the call to the cellular phone network by automatically calling up the user's cellular phone number, via line 32 and the switching fabric 28, and normal cellular phone communication ensues at 54. If however the cellular phone 14 is present at the base station 12, there is little point in routing the call to the cellular phone 14.

The processor 26 then checks at 56 the status of the signal on line 42 to see whether the cordless phone 36 is at its base station 34. If not, the processor 26 routes the call to the cordless phone via the base unit 40, at 58. If the user answers, normal cordless communication follows at 60. If there is no answer, the processor 26 checks at 62 whether an alternative destination has been programmed. If so the call is routed to the alternative destination for subsequent processing, otherwise it is diverted to an answering machine 64, shown in Figure 1.

Thus, when the system has access to a switching fabric, an incoming call to the publicised POTS number is routed as appropriate to the cellular phone 14, the cordless phone 36, an alternative destination or an answering machine, dependent on the physical presence of the cellular phone 14 at the cellular phone base station 12 and the presence of the cordless phone 36 at the cordless phone base station, determined in each case by checking for current flow through the respective chargers 16, 38.

It should be noted that the telephone management system may be a single device or a number of devices, possibly at different locations but interconnected so that the overall functionality is as set out above. Thus, although the cordless phone base station 34 shows the charger 38 and the base unit 40 as a single unit, they may be quite separate, with the charger 38 being at the user's workstation and the base unit located some distance away.

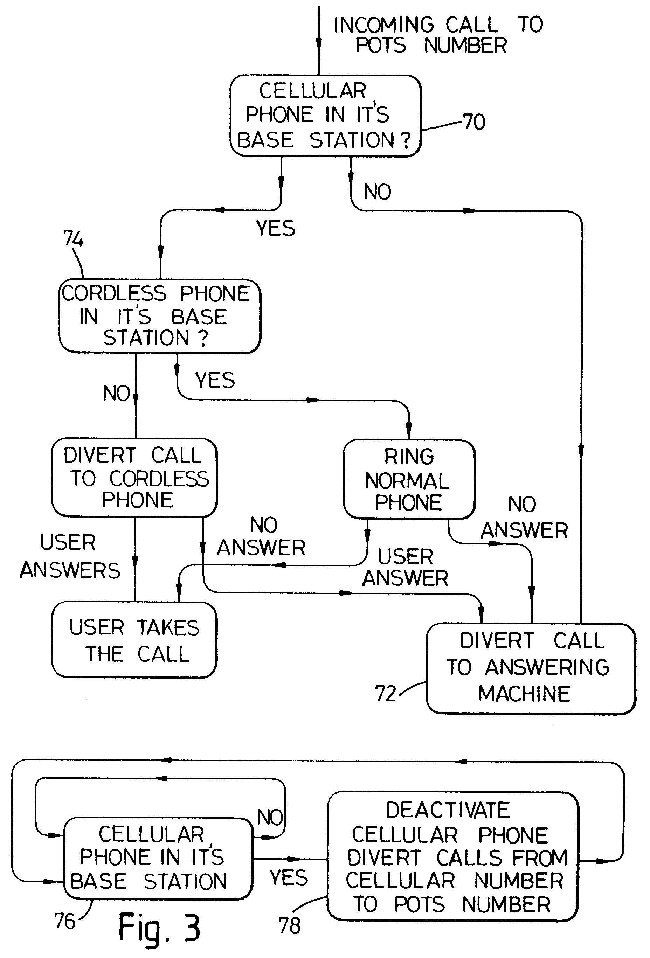

Referring now to Figure 3, this illustrates the operation of the telephone management system of Figure 1 where there is access to just a single line. The management system 10 is the same as before except that it is connected directly to the POTS at line 30 rather than to a switching fabric 28 and incorporates a normal phone 65, shown in dotted lines in Figure 1.

Both the POTS number of the management system 10 and the cellular phone number of the user are publicised. On detecting an incoming call, the call management processor 26 determines at 70 whether the cellular phone 14 is present at the base station 12, by checking the status signal from the detector 22. If the cellular phone 14 is absent, it is assumed to be operating as a normal cellular phone, and so the call management processor 26 at 72 routes the incoming call to the answering machine 64, which is programmed with a message indicating that the user is presently unavailable on the number called but that the caller may contact the user by dialling the cellular telephone number.

In a sub-routine shown at the foot of Figure 2, when the cellular phone 14 is in the charger 16, it is deactivated either manually, or automatically via a data connection between the cellular phone and the charger. Deactivation in this context means that it is either manually or automatically programmed to redirect calls or forward messages to another telephone number. If the user has only one telephone management system associated with him, the forwarding number can be permanently programmed to be the POTS number of that management system. If he has several such systems, the forwarding number should be programmed to the POTS number of the management system where he can be contacted.

If the processor determines that the cellular phone 14 is present at the cellular base station 12, the processor then determines at 74 whether the cordless phone 36 is at the cordless base station 34. If the cordless phone 36 is present at the base, the processor 26 connects the incoming call to the POTS phone 65. If the call is not answered within a set time, the call is diverted to the answering machine 64.

If, however, the cordless phone 36 is absent, the incoming call is diverted to the cordless fabric by the base unit 40. Again, if there is no answer, the call may be diverted to the answering machine 64.

As mentioned above, the logic of this system may be distributed between several system components which are spatially separate but interconnected.

Many forms of interconnection between the system components are possible, including I.R. data links, radio, land line etc. Also, networks of management systems may be set up, in, say, an office, each covering a specific area.

The system may of course be used with any suitable types of cordless phones and cellular phones. Thus use is envisaged with the CT1, CT2 and DECT (Digital European Cordless Telecommunication) systems of cordless telephone, analogue cellular systems such as Racal Vodaphone and BT Securicor Cellnet, and digital cellular systems such as GSM, and PCN's (Personal Communications Networks) when implemented.

## Claims

1. A telephone management system for use with a wirefree phone and a further phone or message management means, said system defining a base station for said wirefree phone and including means for determining the presence or absence of said wirefree phone at said base station, thereby to deduce the operational status thereof, and means for selectively routing an incoming call to said wirefree phone, or to said further phone or message management means, dependent on the absence or presence of the wirefree phone.

2. A telephone management system according to Claim 1, wherein said wirefree phone comprises a cellular phone.

3. A telephone management system according to Claim 1 or 2, wherein said wirefree phone incorporates a rechargeable battery, and said wirefree phone base station includes electrical charging means for charging the battery of said wirefree phone.

4. A telephone management system according to Claim 3, wherein said means for determining the presence or absence of said wirefree phone comprises current detector means responsive in use to current consumption by said wirefree phone electrical charging means.

5. A telephone management system according to any preceding Claim, wherein said further phone or message management means includes a further wirefree phone, and said system further defines a base station for said further wirefree phone and includes means for determining the presence or absence of said further wirefree phone at said base station thereby to deduce the operational status thereof, and said means for selectively routing is responsive also to the presence or absence of said further wirefree phone at its base station.

6. A telephone management system according to Claim 5, wherein said further wirefree phone comprises a cordless phone.

7. A telephone management system according to Claim 5 or 6, wherein said further wirefree phone incorporates a rechargeable battery, and said further wirefree phone base station includes electrical charging means for charging the battery of said further wirefree phone.

8. A telephone management system according to Claim 7, wherein said means for determining the presence or absence of said further wirefree phone comprises current detector means responsive in use to current consumption by said further wirefree phone electrical charging means.

9. A telephone management system according to any one of Claims 5 to 8, wherein said system further includes telephone answering means operable to transmit an outgoing message and/or record an incoming message, and wherein said means for selectively routing is operable to route an incoming call to said telephone answering machine if neither wirefree phone is operational or if the selected phone is busy or does not answer.

10. A telephone management system according to any one of Claims 5 to 8, wherein said system includes a further phone, and wherein said means for selectively routing is operable to route an incoming call to said further phone if neither of said wirefree phones is operational, or if the selected phone is busy or does not answer.

11. A telephone management system according to Claim 1 wherein said wirefree phone is a cellular phone, and said further phone or message management means includes a cordless phone, and said system has access to a plurality of lines and a switching fabric, and said selective routing is as follows:-
(i) if the cellular phone is away from its base station, incoming calls are routed to the cellular phone,
(ii) if only the cordless phone is away from its base station, incoming calls are routed to the cordless phone,
(iii) if neither the cellular phone nor the cordless phone is away from its respective base station, incoming calls are selectively diverted to an alternative destination or to a telephone answering means.

12. A telephone management system according to Claim 1 wherein said wirefree phone is a cellular phone, and said further phone or message management means includes a cordless phone and said system has access to a single line, and said selective routing is as follows:-
(i) if the cellular phone is away from its base station, incoming calls are routed to a telephone answering means, which optionally instructs the caller to dial the cellular phone number direct,
(ii) if only the cordless phone is away from its base station, incoming calls are routed to the cordless phone,
(iii) if neither the cellular phone nor the cordless phone is away from its respective base station, incoming calls are routed to a normal phone or a telephone answering means.

13. A telephone management apparatus for use with a wirefree phone connectable to an associated base station, and a further phone or message management means, said apparatus being operable for selectively routing incoming calls to said wirefree phone or said further phone or message management means, said apparatus comprising:-
interface means for being connected in use to a telephone line or switching fabric to transmit or receive calls via said telephone line or switching fabric;
presence detector means for detecting the presence of said wirefree phone at said base station; and
call routing means responsive to said presence detector means to route an incoming call received via said interface means to said wirefree phone or to said further phone or message management means, dependent on the output of said presence detector means.

14. A telephone management apparatus according to Claim 13, wherein said further phone or message management means includes a further wirefree phone connectable to a further wirefree phone base station, and said apparatus includes further presence detector means for detecting the presence of said further wirefree phone, and said call routing means is responsive also to said further presence detector means selectively to route an incoming call to said wirefree phone or said further wirefree phone.
